# EUROPÄISCHE PATENTANMELDUNG

(11) **EP 3 578 776 A1**
(43) Veröffentlichungstag der Anmeldung: **11.12.2019**
(21) Anmeldenummer: 19176372.1
(22) Anmeldetag: 24.05.2019
(51) Int. Cl.: F02B 47/02, F02M 25/022, F02M 25/025, F02M 55/00, F02M 43/00, F02M 43/02, B01D 19/00, F02M 37/00, F02M 37/04

(54) **BRENNKRAFTMASCHINE MIT WASSEREINSPRITZUNG SOWIE VERFAHREN ZUM BETREIBEN EINER BRENNKRAFTMASCHINE**

(30) Priorität: 08.06.2018 DE 102018209145
(71) Anmelder: Robert Bosch GmbH, 70442 Stuttgart (DE)
(72) Erfinder: Schenk, Peter, 71640 Ludwigsburg (DE)

(57) **Zusammenfassung**

Die vorliegende Erfindung betrifft eine Brennkraftmaschine, umfassend ein Kraftstoffeinspritzsystem (2) mit wenigstens einem Kraftstoffinjektor (4), einer Kraftstoffleitung (21), einem Kraftstofftank (20) und einer in der Kraftstoffleitung (21) angeordneten Kraftstoffpumpe (23), ein Wassereinspritzsystem (3) mit einem Wassertank (30), einer Wasserleitung (31) und einer in der Wasserleitung angeordneten Wasserpumpe (32), wobei der Kraftstoffinjektor (4) direkt an einem Brennraum (5) der Brennkraftmaschine angeordnet ist, wobei die Wasserleitung (31) zur Kraftstoffpumpe (23) führt, so dass Wasser in einen Leitungsabschnitt (21a) zwischen der Kraftstoffpumpe (23) und dem Kraftstoffinjektor (4) zum Kraftstoff gemischt werden kann, und eine Entlüftungsleitung (11), welche an der Wasserleitung (31) angeordnet ist, um im Falle eines Abstellens der Brennkraftmaschine die Wasserleitung (31) zu entlüften.

## Beschreibung

### Stand der Technik

Die vorliegende Erfindung betrifft eine Brennkraftmaschine mit einem Wassereinspritzsystem, insbesondere zur Verwendung in Fahrzeugen, sowie ein Verfahren zum Betreiben einer derartigen Brennkraftmaschine.

Brennkraftmaschinen mit Wassereinspritzsystemen sind aus dem Stand der Technik in unterschiedlichen Ausgestaltungen bekannt. Durch eine Wassereinspritzung können hierbei Abgastemperaturen reduziert werden und eine Klopfneigung der Brennkraftmaschine im Betrieb vermieden werden. Bekannt sind hierbei separate Wassereinspritzsysteme, wie beispielsweise in der DE 10 2015 208 476 A1 beschrieben. Die bekannten Wassereinspritzsysteme sind hierbei jedoch häufig sehr komplex und insbesondere teuer in der Herstellung. Ein weiterer Problemkreis bei Wassereinspritzsystemen ist die Gefahr eines Gefrierens des Wassers bei Temperaturen unter 0°C. Hierbei können Komponenten des Wassereinspritzsystems beschädigt werden, falls diese noch mit Wasser gefüllt sind.

### Offenbarung der Erfindung

Die erfindungsgemäße Brennkraftmaschine mit den Merkmalen des Anspruchs 1 weist demgegenüber den Vorteil auf, dass eine besonders kostengünstige und einfach aufgebaute Wassereinspritzung möglich ist. Hierbei ist das Wassereinspritzsystem sehr robust aufgebaut und ferner ist eine sichere Entfernung des Wassers aus dem Wassereinspritzsystem bzw. weiteren Komponenten der Brennkraftmaschine möglich. Dies wird erfindungsgemäß dadurch erreicht, dass die Brennkraftmaschine ein Kraftstoffeinspritzsystem mit einem Kraftstoffinjektor, einer Kraftstoffleitung und einer Kraftstoffpumpe umfasst, sowie ein Wassereinspritzsystem mit einem Wassertank, einer Wasserleitung und einer in der Wasserleitung angeordneten Wasserpumpe umfasst. Das Wassereinspritzsystem ist dabei mit dem Kraftstoffeinspritzsystem in Fluidverbindung. Hierbei führt die Wasserleitung zur Kraftstoffpumpe, so dass Wasser in einen Leitungsabschnitt des Kraftstoffeinspritzsystems zwischen der Kraftstoffpumpe und dem Kraftstoffinjektor zum Kraftstoff gemischt werden kann. Der Kraftstoffinjektor spritzt dann ein Gemisch von Wasser und Kraftstoff ein. Hierbei ist der Kraftstoffinjektor direkt an einen Brennraum der Brennkraftmaschine angeordnet, so dass eine Direkteinspritzung des Wasser-Kraftstoff-Gemischs in den Brennraum möglich ist. Ferner ist eine Entlüftungsleitung vorgesehen, welche an der Wasserleitung angeordnet ist, um im Falle eines Abstellens der Brennkraftmaschine die Wasserleitung zu entlüften. Somit kann ein Gefrieren von Wasser im Wassereinspritzsystem vermieden werden.

Die Unteransprüche zeigen bevorzugte Weiterbildungen der Erfindung.

Besonders bevorzugt ist ein Rückschlagventil in der Entlüftungsleitung angeordnet. Das Rückschlagventil ist dabei derart angeordnet, dass verhindert wird, das Wasser aus der Entlüftungsleitung austreten kann. Das Rückschlagventil ist vorzugsweise federbelastet und öffnet bei einem Unterdruck in der Entlüftungsleitung automatisch.

Die Entlüftungsleitung ist vorzugsweise derart vorgesehen, dass die Entlüftungsleitung die Wasserleitung mit einem Saugbereich der Brennkraftmaschine verbindet. Der Saugbereich ist besonders bevorzugt ein Saugrohr der Brennkraftmaschine. Hierdurch kann eine Entlüftung der Wasserleitung über den Saugbereich ermöglicht werden.

Alternativ verbindet die Entlüftungsleitung die Wasserleitung mit einem Umgebungsbereich. Der Umgebungsbereich ist beispielsweise ein Motorraum eines Fahrzeugs. Auch hierdurch kann eine sichere Entlüftung der Wasserleitung ermöglicht werden.

Die Wasserpumpe des Wassereinspritzsystems ist bevorzugt ferner eingerichtet, eine Förderrichtung umzukehren. Dadurch kann ein Ansaugen von Wasser aus der Wasserleitung ermöglicht werden. Somit kann das Wasser nicht mehr in der Wasserleitung und den in der Wasserleitung eingebauten Komponenten gefrieren und entsprechend treten keine Beschädigungen bei Temperaturen unter dem Gefrierpunkt von Wasser aufgrund von gefrierenden Wassers auf.

Die Brennkraftmaschine umfasst vorzugsweise ferner eine Steuereinheit, welche eingerichtet ist, die Brennkraftmaschine nach einem Abstellbefehl zum Anhalten der Brennkraftmaschine solange weiter zu betreiben, bis das in dem Leitungsabschnitt zwischen der Kraftstoffpumpe und dem Kraftstoffinjektor enthaltende Wasser-Kraftstoff-Gemisch ausgetragen ist und sich nur noch nachgeförderter Kraftstoff im Leitungsabschnitt befindet. Hierbei ist die Steuereinheit ferner bevorzugt eingerichtet, die Wasserpumpe anzuhalten. Dadurch wird sichergestellt, dass mittels der Kraftstoffpumpe kein zusätzliches Wasser in den Leitungsabschnitt zwischen der Kraftstoffpumpe und dem Kraftstoffinjektor angesaugt wird.

Weiter bevorzugt ist in der Wasserleitung ein Absperrventil angeordnet. Das Absperrventil wird vorzugsweise von der Steuereinheit abgesperrt, wenn ein Abstellbefehl der Brennkraftmaschine vorhanden ist.

Gemäß einer weiteren bevorzugten Ausgestaltung der Erfindung ist in der Wasserleitung ein Dosierventil angeordnet. Das Dosierventil ist eingerichtet, eine Wassermenge entsprechend einem Wassereinspritzbefehl zur Kraftstoffpumpe zu dosieren.

Ferner betrifft die vorliegende Erfindung ein Verfahren zum Betreiben einer Brennkraftmaschine mit einem Kraftstoffeinspritzsystem und einem Wassereinspritzsystem, wobei das Wassereinspritzsystem Wasser zu einer Kraftstoffpumpe des Kraftstoffeinspritzsystems fördert. Beim erfindungsgemäßen Verfahren wird dabei nach einem Abstellbefehl die Brennkraftmaschine noch so lange weiterbetrieben, bis ein Wasser-Kraftstoff-Gemisch aus einem Leitungsabschnitt zwischen der Kraftstoffpumpe und einem Kraftstoffinjektor ausgespült ist. Vorzugsweise wird hierbei eine Wasserpumpe nicht mehr weiterbetrieben und/oder bevorzugt ein Absperrventil in der Wasserleitung geschlossen, um kein Wasser mehr in den Leitungsabschnitt zwischen der Kraftstoffpumpe und dem Kraftstoffinjektor zuzuführen. Die Kraftstoffpumpe kann somit nur noch Kraftstoff ansaugen, welcher in dem Leitungsabschnitt dann selbst bei Temperaturen unterhalb des Gefrierpunktes von Wasser unkritisch ist, da der Kraftstoff bei diesen Temperaturen nicht gefriert.

Um eine Menge an Wasser-Kraftstoff-Gemisch im Leitungsabschnitt zwischen der Kraftstoffpumpe und der Wasserpumpe möglichst gering zu halten, ist ein Volumen des Leitungsabschnitts möglichst gering zu wählen.

Es sei ferner angemerkt, dass das Kraftstoffeinspritzsystem bevorzugt ein Kraftstoffrail umfasst, in welchem Kraftstoff bzw. ein Wasser-Kraftstoff-Gemisch gespeichert wird, wobei das Kraftstoffrail mit mehreren Kraftstoffinjektoren, welche jeweils unmittelbar an einem Brennraum angeordnet sind, in Verbindung steht.

Die Ansteuerung der Kraftstoffpumpe wird vorzugsweise mittels einer Steuereinheit ausgeführt, welche eingerichtet ist, in Abhängigkeit eines Drucks des Fluids im Leitungsabschnitt zwischen der Kraftstoffpumpe und dem Kraftstoffinjektor die Kraftstoffpumpe zu betreiben.

Weiter bevorzugt ist die Wasserpumpe in einem Wassertank angeordnet. Hierbei ist besonders bevorzugt ein Absperrventil und die Wasserpumpe in einem Modul zusammengefasst, welches bevorzugt im Wassertank angeordnet ist.

Das Kraftstoffeinspritzsystem umfasst weiter bevorzugt eine Niederdruck-Kraftstoffpumpe, welche in einem Leitungsabschnitt zwischen einem Kraftstofftank und der Kraftstoffpumpe, in welcher die Wasserleitung mündet, angeordnet ist. Dadurch ist die Kraftstoffpumpe eine sog. Hochdruck-Kraftstoffpumpe, welche eingerichtet ist, hohe Kraftstoffeinspritzdrücke zu erzeugen.

Die Brennkraftmaschine ist vorzugsweise eine Brennkraftmaschine eines Fahrzeugs.

### Zeichnung

Nachfolgend werden unter Bezugnahme auf die begleitende Zeichnung bevorzugte Ausführungsbeispiele der Erfindung im Detail beschrieben. Gleiche bzw. funktional gleiche Teile sind dabei mit den gleichen Bezugszeichen bezeichnet. In der Zeichnung ist:
- Figur 1: eine schematische Ansicht einer Brennkraftmaschine gemäß einem ersten Ausführungsbeispiel der Erfindung, und
- Figur 2: eine schematische Ansicht einer Brennkraftmaschine gemäß einem zweiten Ausführungsbeispiel der Erfindung.

### Bevorzugte Ausführungsformen der Erfindung

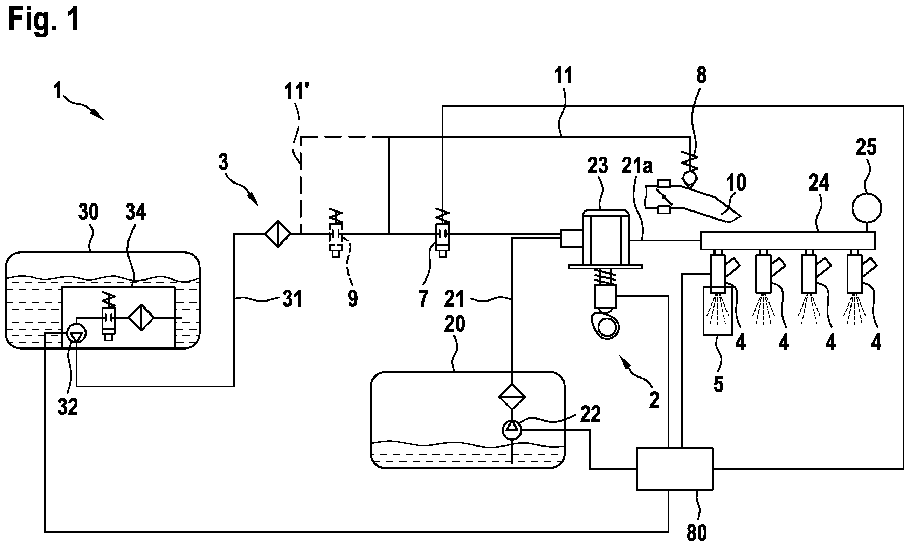

Nachfolgend wird unter Bezugnahme auf Figur 1 eine Brennkraftmaschine 1 gemäß einem ersten bevorzugten Ausführungsbeispiel der Erfindung im Detail beschrieben.

Wie in Figur 1 gezeigt, umfasst die Brennkraftmaschine 1 ein Kraftstoffeinspritzsystem 2 und ein Wassereinspritzsystem 3. Das Kraftstoffeinspritzsystem 2 umfasst einen Kraftstofftank 20, eine Kraftstoffleitung 21, eine Niederdruckpumpe 22 und eine Hochdruckpumpe 23. Die Kraftstoffleitung 21 verbindet dabei den Kraftstofftank 20 mit einem Rail 24. Am Rail 24 kann ein Drucksensor 25 angeordnet sein.

Wie weiter aus Figur 1 ersichtlich ist, sind am Rail 24 eine Vielzahl von Kraftstoffinjektoren 4 angeordnet. Hierbei spritzt jeder Kraftstoffinjektor 4 unmittelbar in einen Brennraum 5 der Brennkraftmaschine ein. In Figur 1 ist dies nur schematisch für einen der Kraftstoffinjektoren dargestellt.

Das Wassereinspritzsystem 3 umfasst einen Wassertank 30, eine Wasserleitung 31 und eine Wasserpumpe 32. Die Wasserleitung 31 führt dabei vom Wassertank 30 zur Hochdruckpumpe 23 des Kraftstoffeinspritzsystems. Dadurch kann die Hochdruckpumpe 23 des Kraftstoffeinspritzsystems sowohl Kraftstoff als auch Wasser ansaugen. Somit wird dem Rail 24 und den Kraftstoffinjektoren 4 ein Wasser-Kraftstoff-Gemisch in Form einer Emulsion zugeführt, welches direkt in den Brennraum 5 eingespritzt werden kann.

Um eine Dosierung einer einzuspritzenden Wassermenge zu ermöglichen, ist in der Wasserleitung 31 ferner noch ein Dosierventil 7 angeordnet. Das Dosierventil 7 ist dabei eingerichtet, eine Verbindung des Wassereinspritzsystems zur Hochdruckpumpe 23 freizugeben oder zu verschließen und eine einzuspritzende Wassermenge zu dosieren. Wie in Figur 1 gezeigt, ist das Dosierventil 7 zwischen der Wasserpumpe 32 und der Hochdruckpumpe 23 angeordnet.

Ferner umfasst die Brennkraftmaschine 1 eine Steuereinheit 80, welche eingerichtet ist, die Hochdruckpumpe 23, die Niederdruckpumpe 22 und die Wasserpumpe 32 anzutreiben. Ferner ist die Steuereinheit 80 eingerichtet, das Dosierventil 7 anzusteuern sowie die Kraftstoffinjektoren 4 anzusteuern.

Ferner umfasst die Brennkraftmaschine 1 eine Entlüftungsleitung 11. Wie aus Figur 1 ersichtlich ist, verbindet die Entlüftungsleitung 11 einen Saugbereich 10 der Brennkraftmaschine mit der Wasserleitung 31. Hierbei mündet in diesem Ausführungsbeispiel die Entlüftungsleitung 11 in einem Bereich der Wasserleitung 31 zwischen dem Dosierventil 7 und der Wasserpumpe 32.

Wie in Figur 1 in gestrichelten Linien eingezeichnet, kann die Entlüftungsleitung 11 jedoch auch wenn in der Wasserleitung 31 noch zusätzlich ein Absperrventil 9 angeordnet ist, in einen Bereich der Wasserleitung 31 zwischen dem optionalen Absperrventil 9 und der Wasserpumpe 32 (Bezugszeichen 11') angeordnet sein.

Der Saugbereich 10 dieses Ausführungsbeispiels ist ein Saugrohr der Brennkraftmaschine.

In der Entlüftungsleitung 11 ist ferner ein Rückschlagventil 8 vorgesehen, welches in Richtung zum Saugbereich 10 schließt.

Die Funktion der Brennkraftmaschine 1 ist hierbei wie folgt. Wenn die Brennkraftmaschine betrieben werden soll, ohne dass eine Wassereinspritzung notwendig ist, ist das Dosierventil 7 in der Wasserleitung 31 geschlossen und die Hochdruckpumpe 23 saugt ausschließlich Kraftstoff aus dem Kraftstofftank 20 an. Ein Vordruck des Kraftstoffs wird durch die Niederdruckpumpe 22 erzeugt. Demnach spritzen die Kraftstoffinjektoren 4 ausschließlich Kraftstoff in die Brennräume 5 der Brennkraftmaschine. Wenn eine Einspritzung von Wasser notwendig ist, wird die Wasserpumpe 32 betrieben, so dass ein Druck in der Wasserleitung 31 steigt und vorzugweise höher ist als ein Druck, welcher in einem Leitungsbereich 21a zwischen der Hochdruckpumpe 23 und dem Kraftstoffrail 24 vorhanden ist. Dann kann auf einfache Weise mittels des Dosierventils 7 Wasser in den Leitungsbereich 21a über die Hochdruckpumpe 23 zugeführt werden. Somit ist ein Wasser-Kraftstoff-Gemisch als Emulsion in dem Leitungsbereich 21a und dem Kraftstoffrail 24 vorhanden und diese Emulsion kann dann über die Kraftstoffinjektoren 4 in die Brennräume 5 eingespritzt werden.

Wie aus der vorstehenden Beschreibung ersichtlich ist, kann somit im Betrieb der Brennkraftmaschine ein Wasser-Kraftstoff-Gemisch im Leitungsbereich 21a vorhanden sein. Bei einem sofortigen Abstellen der Brennkraftmaschine wäre es somit möglich, dass Wasser im Leitungsbereich 21a und im Rail 24 bzw. im Bereich der Kraftstoffinjektoren 4 vorhanden ist. Falls nun eine Außentemperatur unterhalb eines Gefrierpunktes von Wasser liegt, bestünde die Gefahr, dass das dort enthaltende Wasser gefriert.

Um ein derartiges Gefrieren des Wassers zu vermeiden, wird nun erfindungsgemäß das Wasser aus dem Kraftstoffsystem im Leitungsbereich 21a und den Kraftstoffinjektoren 4 entfernt. Hierbei wird nach einem Abstellbefehl für die Brennkraftmaschine die Brennkraftmaschine noch solange weiterbetrieben, bis in dem Leitungsabschnitt 21a kein Wasser-Kraftstoff-Gemisch vorhanden ist, sondern ausschließlich Kraftstoff. Von daher ist ein Volumen des Leitungsabschnitts 21a sowie des Kraftstoffrails 24 möglichst klein zu wählen.

Um zu vermeiden, dass mittels der Hochdruckpumpe 23 zusätzliches Wasser angesaugt wird, wird das Dosierventil 7 geschlossen. Somit saugt die Hochdruckpumpe 23 ausschließlich Kraftstoff aus dem Kraftstofftank 20 an, so dass das Wasser-Kraftstoff-Gemisch durch das Weiterbetreiben durch reinen Kraftstoff ersetzt wird. Dadurch wird die Gefahr des Gefrierens von Wasser im Kraftstoffsystem gebannt.

Damit auch das im Wassersystem vorhandene Wasser nicht gefriert, wird vorzugsweise die Wasserpumpe 32 in umgekehrter Richtung betrieben. Dadurch saugt die Wasserpumpe 32 Wasser aus der Wasserleitung 31 an. Damit dies möglich ist, öffnet das federbelastete Rückschlagventil 8 in der Entlüftungsleitung 11. Hierdurch wird Luft aus dem Saugbereich 10 in die Entlüftungsleitung 11 und über das entsprechend geöffnete Dosierventil 7 in die Wasserleitung 31 angesaugt. Dadurch kann das Wasser vollständig aus der Wasserleitung 31 und der Entlüftungsleitung 11 entfernt werden.

Somit kann erfindungsgemäß bei einem Abstellen der Brennkraftmaschine ein Entlüften der Wasserleitung ermöglicht werden sowie ein Nachspülen des Leitungsbereichs 21a, um das Wasser-Kraftstoff-Gemisch aus diesem Leitungsbereich 21a und dem Kraftstoffrail 24 zu entfernen. Dadurch sind die Komponenten vor einem Einfrieren von Wasser geschützt.

Wie aus der Beschreibung des Ausführungsbeispiels ersichtlich ist, ist der Aufbau des Kraftstoffeinspritzsystems sehr robust. Ferner kann das Wassereinspritzsystem mit einer sehr geringen Anzahl von Bauteilen bereitgestellt werden, so dass das Wassereinspritzsystem einfach und kostengünstig bereitstellbar ist.

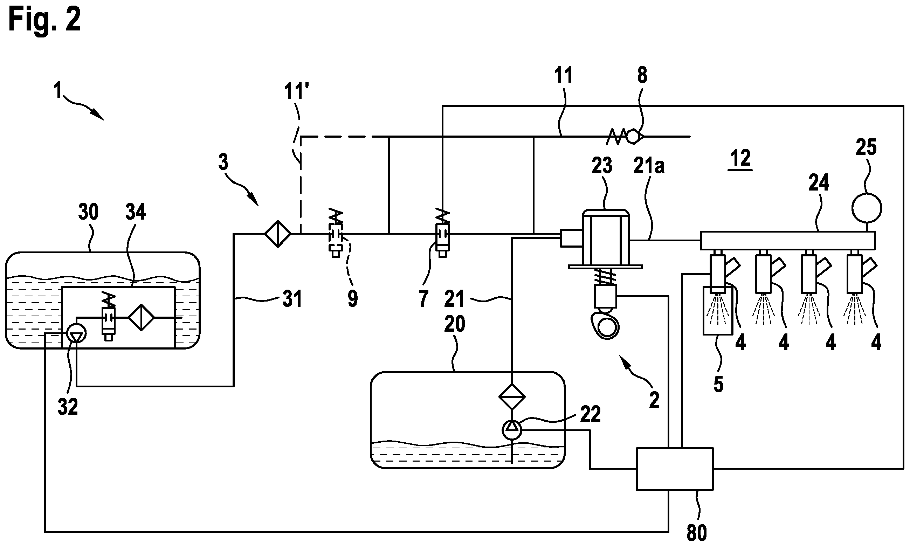

Figur 2 zeigt eine Brennkraftmaschine 1 gemäß einem zweiten Ausführungsbeispiel der Erfindung. Im Unterschied zum ersten Ausführungsbeispiel führt beim zweiten Ausführungsbeispiel die Entlüftungsleitung 11 zu einem Umgebungsbereich 12. Somit wird Luft zum Entlüften der Entlüftungsleitung 11 und der Wasserleitung 31 aus der Umgebung 12 angesaugt, wenn das federbelastete Rückschlagventil 8 öffnet. Die Entlüftungsleitung 11 kann beispielsweise in einem Motorraum eines Fahrzeugs enden und von dort Luft ansaugen. Ansonsten entspricht dieses Ausführungsbeispiel dem ersten Ausführungsbeispiel, so dass auf die dort gegebene Beschreibung verwiesen werden kann.

## Patentansprüche

1. Brennkraftmaschine, umfassend:
- ein Kraftstoffeinspritzsystem (2) mit wenigstens einem Kraftstoffinjektor (4), einer Kraftstoffleitung (21), einem Kraftstofftank (20) und einer in der Kraftstoffleitung (21) angeordneten Kraftstoffpumpe (23),
- ein Wassereinspritzsystem (3) mit einem Wassertank (30), einer Wasserleitung (31) und einer in der Wasserleitung angeordneten Wasserpumpe (32),
- wobei der Kraftstoffinjektor (4) direkt an einem Brennraum (5) der Brennkraftmaschine angeordnet ist,
- wobei die Wasserleitung (31) zur Kraftstoffpumpe (23) führt, so dass Wasser in einen Leitungsabschnitt (21a) zwischen der Kraftstoffpumpe (23) und dem Kraftstoffinjektor (4) zum Kraftstoff zugemischt werden kann, und
- eine Entlüftungsleitung (11), welche an der Wasserleitung (31) angeordnet ist, um im Falle eines Abstellens der Brennkraftmaschine die Wasserleitung (31) zu entlüften.

2. Brennkraftmaschine nach Anspruch 1, wobei ein Rückschlagventil (8) in der Entlüftungsleitung (11) angeordnet ist.

3. Brennkraftmaschine nach einem der vorhergehenden Ansprüche, wobei die Entlüftungsleitung (11) die Wasserleitung (31) mit einem Saugbereich (10) der Brennkraftmaschine verbindet.

4. Brennkraftmaschine nach Anspruch 1 oder 2, wobei die Entlüftungsleitung (11) die Wasserleitung (31) mit einem Umgebungsbereich (12) verbindet.

5. Brennkraftmaschine nach einem der vorhergehenden Ansprüche, wobei die Wasserpumpe (32) eingerichtet ist, eine Förderrichtung umzukehren, um Wasser aus der Wasserleitung (31) zurück in den Wassertank (30) zu saugen.

6. Brennkraftmaschine nach einem der vorhergehenden Ansprüche, ferner umfassend eine Steuereinheit (80), welche eingerichtet ist, die Brennkraftmaschine nach einem Abstellbefehl zum Abstellen der Brennkraftmaschine solange weiterzubetreiben, bis das im Leitungsabschnitt (21a) der Kraftstoffleitung zwischen der Kraftstoffpumpe (23) und dem Kraftstoffinjektor (4) enthaltene Wasser-Kraftstoff-Gemisch ausgetragen ist.

7. Brennkraftmaschine nach Anspruch 6, wobei die Steuereinheit (80) eingerichtet ist, die Wasserpumpe im Falle des Abstellens der Brennkraftmaschine anzuhalten.

8. Brennkraftmaschine nach einem der vorhergehenden Ansprüche, ferner umfassend ein Dosierventil (7), welches in der Wasserleitung (31) angeordnet ist und/oder ferner umfassend ein Absperrventil (9), welches in der Wasserleitung (31) angeordnet ist.

9. Verfahren zum Betreiben einer Brennkraftmaschine mit einem Kraftstoffeinspritzsystem (2) und einem Wassereinspritzsystem (3), wobei das Wassereinspritzsystem (3) mit einer Kraftstoffpumpe (23) verbunden ist, so dass die Kraftstoffpumpe (23) sowohl Wasser als auch Kraftstoff ansaugen kann und über wenigstens einen Injektor (4) ein Wasser-Kraftstoff-Gemisch in einen Brennraum (5) der Brennkraftmaschine einspritzen kann, wobei nach einem Abstellbefehl der Brennkraftmaschine die Brennkraftmaschine solange weiterbetrieben wird, bis das Wasser-Kraftstoff-Gemisch aus einem Leitungsabschnitt (21a) zwischen der Kraftstoffpumpe (23) und dem Kraftstoffinjektor (4) ausgespült ist und sich nur noch Kraftstoff im Leitungsabschnitt (21a) befindet.

10. Verfahren nach Anspruch 9, wobei nach einem Abstellbefehl eine Wasserpumpe (32) des Wassereinspritzsystems (3) abgestellt wird und/oder ein Dosierventil (7) in der Wasserleitung (31) geschlossen wird.
